(19) Europäisches Patentamt
European Patent Office
Office européen des brevets

(11) Publication number: 0 223 145 A1

# (12) EUROPEAN PATENT APPLICATION

(21) Application number: 86115225.4

(51) Int. Cl.4: C08F 18/04

(22) Date of filing: 03.11.86

(30) Priority: 12.11.85 US 797356
21.10.86 US 921568

(43) Date of publication of application:
27.05.87 Bulletin 87/22

(84) Designated Contracting States:
AT BE CH DE FR GB IT LI LU NL SE

(71) Applicant: National Starch and Chemical Corporation
10 Finderne Avenue Box 6500
Bridgewater New Jersey 08807(US)

(72) Inventor: Iovine, Carmine P.
263 White Oak Ridge Rd.
Bridgewater, N.J. 08807(US)
Inventor: Shih, Yen-Jer
25 MacAfee Road
Somerset, N.J. 08873(US)
Inventor: Mudge, Paul R.
440 Tall Oak Lane
Somerville, N.J. 08876(US)
Inventor: Trzasko, Peter T.
31 Linden Lane
Plainsboro, N.J. 08536(US)

(74) Representative: Hagemann, Heinrich, Dr. et al
Patentanwälte GEYER, HAGEMANN & KEHL
Postfach 860329
D-8000 München 86(DE)

## (54) Hydrophobically modified starch stabilized vinyl ester polymer emulsions.

(57) Vinyl ester polymers are prepared by conventional emulsion polymerization techniques employing l-l0% by weight of this polymer of an hydropobically modified starch as the protective colloid.

EP 0 223 145 A1

Xerox Copy Centre

# HYDROPHOBICALLY MODIFIED STARCH STABILIZED VINYL ESTER POLYMER EMULSIONS

This invention is directed to hydrophobically modified starch-protected polyvinyl ester emulsions and to a method for the preparation thereof.

Vinyl ester polymeric emulsions, especially those derived from polyvinyl acetate homopolymers or from copolymers of vinyl acetate with ethylene, are widely used industrially in many application areas. For example, polyvinyl acetate homopolymer emulsions are used in general packaging and converting adhesive areas such as case and carton sealing and tube winding, as inexpensive wood adhesives, and as labeling adhesives. Copolymer emulsions of vinyl acetate with ethylene or dialkyl maleates are also used as laminating adhesives for a variety of films, webs and other substrates.

Since the presence of an emulsifier, surfactant or other micelle generating substance is undesirable for various industrial applications of these emulsions, it is desirable to prepare the emulsions as emulsifier-free systems in the presence of a protective colloid. The function of the protective colloid is to maintain stability of the emulsion during polymerization and subsequent storage by preventing agglomeration of the discrete small diameter polymer particles during polymerization and reducing sedimentation of the resulting emulsion during storage. Agglomeration of the emulsion manifests itself as grit, high bulk viscosity and ultimate gelation.

The most commonly used protective colloids for polyvinyl ester homo-and copolymer emulsions are polyvinyl alcohol and hydroxyethylcellulose. While these materials perform well in stabilizing the emulsion, they have certain disadvantages. Both polyvinyl alcohol and hydroxyethyl cellulose, for example, are relatively expensive and, at the use levels required to prepare stable, grit-free, unagglomerated, low viscosity emulsions, they impart a significant cost factor to the resulting emulsions. Furthermore, in certain adhesive areas the use of polyvinyl alcohol either detracts from adhesion, for example, when polypropylene or polyethylene substrates are used; or limits the versatility of the adhesive, for example, when borax is used as a formulating additive; and in applications where good water resistance is required.

Accordingly, there is a need for a surfactant-free, inexpensive polyvinyl ester or copolymer emulsion which is stabilized both during polymerization and subsequent storage and use yet which is free from the disadvantages experienced when polyvinyl alcohol is used as the protective colloid.

The use of starch derivatives as the protective colloid for the preparation of vinyl ester and vinyl ester copolymer emulsions is well known and, in most cases, provides a relatively inexpensive polymer emulsion. For example, European Patent Application 21,542 to Lambrechts et al. published January 7, 1981 describes the use of hydroxyethyl and hydroxypropyl starch generally in combination with emulsifiers. When these hydroxyalkyl starches are used as the sole emulsifiers, the amount of starch required to form a satisfactory emulsion is usually in excess of 10% based on the weight of the monomer or monomers and, as such, detracts from the adhesive properties of the emulsion and resulting film. U.S. Patent 4,532,295 issued July 30, 1985 to Brabetz et al. teaches use of similar starches to produce redispersible powders; however, due to the nature of starches employed, their use is limited to relatively specific slow addition polymerization procedures which may give poorer emulsion properties for certain applications. Likewise, the preparation of polyvinyl acetate emulsions in the presence of certain oxidized starches is described in U.S. 3,632,535 issued January 4, 1972 to Gramera et al. The carboxyl content of these starches (0.1 -1.0%) and the typical use levels (10-30% on monomers) of the starch when it is the sole emulsifier all contribute to poor adhesion characteristics as described above.

The use of non-chemically modified, i.e., not esterified or etherified, water soluble or swelling starches also is well known. West German Offen. DE 3,323,804 to Eck et al. published January 3, 1985 describes a polymerization process which utilizes native starch, acid hydrolyzed starch and dextrin. The process imposes many restrictions both on the conditions of polymerization and the type of non-chemically derivatized starch used. These restrictions reflect the poor protective colloid or emulsifying capability, the polymerization retardation effects and the viscosity effects of the non-modified starch agents. For example, native starches which must be cooked are high molecular weight colloids and as such produce high viscosity emulsions. Dextrins, on the other hand, which are low molecular weight degraded starches and thus overcome the viscosity limitations of the native starches, present problems with polymerization retardation. Indeed, batch polymerization (100% of the monomer charged initially), which is a very difficult test for stabilization efficiency, is discouraged.

There is, therefore, a need for a surfactant-free, low grit/viscosity, inexpensive starch-based polyvinyl ester or copolymer emulsion which is stable both during polymerization and in subsequent storage and use and which overcomes the disadvantages experienced when either polyvinyl alcohol or the prior art starches are used as the sole protective colloid.

We have found that surfactant-free polyvinyl ester emulsions may be prepared by the emulsion polymerization of suitable vinyl ester monomers and polymerizable comonomrs in the presence of l-l0% on the weight of total monomer of dispersed or dissolved hydrophobically-modified starch as the sole emulsion stabilizer in the presence of an at least partially water soluble free radical initiator. The resulting emulsions are characterized by low grit, low viscosity and stability toward agglomeration and settling.

The emulsions disclosed herein offer significant economic advantages over conventional emulsions based on polyvinyl alcohol and hydroxyethyl cellulose. In additiion, the hydrophobically-modified starches may be used at low levels and as the sole stabilizer thus affording surfactant-free emulsions. Additionally, because the hydrophobically-modified starches are excellent emulsifiers, they do not present any retardation restrictions to polymerization. Since the novel emulsions of the proposed invention are not limited by their method of preparation, any conventional polymerization procedures may be used including slow addition procedures as well as the far more stringent batch polymerization techniques which can provide high molecular weight polymers. This fact further distinguishes these starch stabilized emulsions from the starch-stabilized emulsion of the prior art.

Particularly preferred emulsions are the homopolymer and copolymer emulsions derived from alkenyl succinate starches and especially from octenylsuccinate waxy maize or tapioca starches particularly those copolymer emulsions comprising vinyl acetate and ethylene. The latter emulsions exhibit thixotropic rheology uncharacteristic of polyvinyl alcohol-stabilized emulsions as well as excellent adhesion to such plastic surfaces as polypropylene, polyethylene and polystyrene. Films from these emulsions exhibit a high degree of water resistance as well.

The modified starches useful herein include hydrophobic starch derivatives containing an ether, simple ester, or half-acid ester substituent with a saturated or unsaturated hydrocarbon chain of at least 5, preferably 5 to 22, carbon atoms.

By the term "hydrophobic starch" is meant a starch ether, simple ester or half-acid ester derivative wherein the ether, simple ester or half-acid ester substituent contains a saturated or unsaturated hydrocarbon chain of at least 5 carbon atoms. It should be understood that the hydrocarbon chain, which consists solely of carbon and hydrogen atoms, may contain some branching. We, however, prefer to employ those starch derivatives wherein the hydrocarbon chain is unbranched. It should also be understood that the substituent may contain other groups in addition to the at least $C_5$ hydrocarbon chain as long as such groups do not interfere with the hydrophobic properties of the substituent.

By the term "simple ester" is meant an ester derived from a monofunctional acid (e.g. monocarboxylic monosulfonic acid) which is distinguished from a "half-acid ester" having pendant carboxyl groups or acid radicals drived from an anhydride of a polycarboxylic acid.

The applicable starch bases which may be so modified include any amylaceous substance such as untreated starch, as well as starch derivatives including dextrinized, hydrolyzed, oxidized, esterified and etherified starches still retaining amylaceous material. The starches may be derived from any sources including, for example, corn, high amylose corn, wheat, potato, tapioca, waxy maize, sago or rice. The preferred starch sources are those high in amylopectin such as waxy maize and tapioca. Examples of suitatable co-derivatization include acetylation, hydroxyalkylation, carboxymethylation, sulfoalkylation, and sulfosuccinoylation. Starch flours may also be used as a starch source.

Alkenyl succinate starches which may be used herein are prepared by the reaction of alkenyl-succinic anhydrides (ASA) with either granular or dispersed starches. The preparation of the ASA reagents and the resulting starch derivatives are described in U.S. Patent 2,661,349 issued December l, l953 to Caldwell et al. The general reaction between ASA reagents and starch may be depicted as follows:

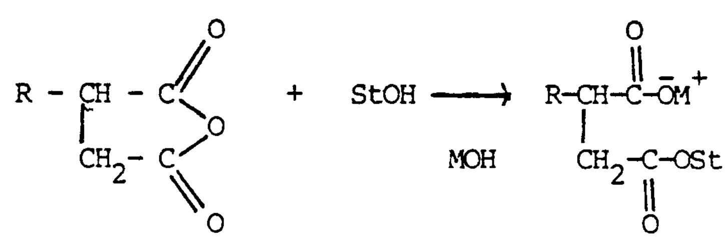

where St-O represents the polysaccharide fragment and M is a metal cation.

The type of R group ay be selected from branched or straight chain aliphatic substituents. R may thus be selected from the group consisting of

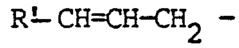

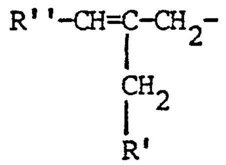

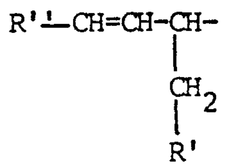

where R′ and R″ may be the same or different and are selected from the group consisting of $CH_3-(CH_2-)_n$ where n = 1-20

The most common types of ASA reagents and the corresponding starch derivatives may be represented as follows:

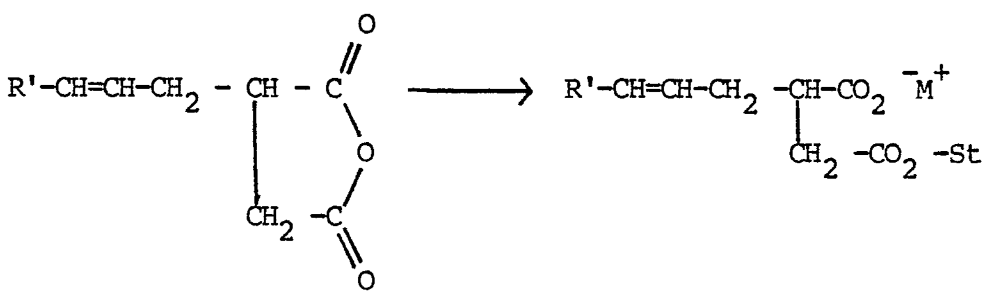

(I)

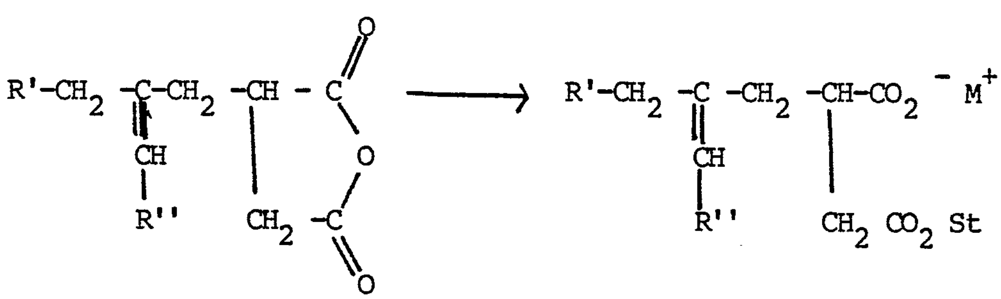

(II)

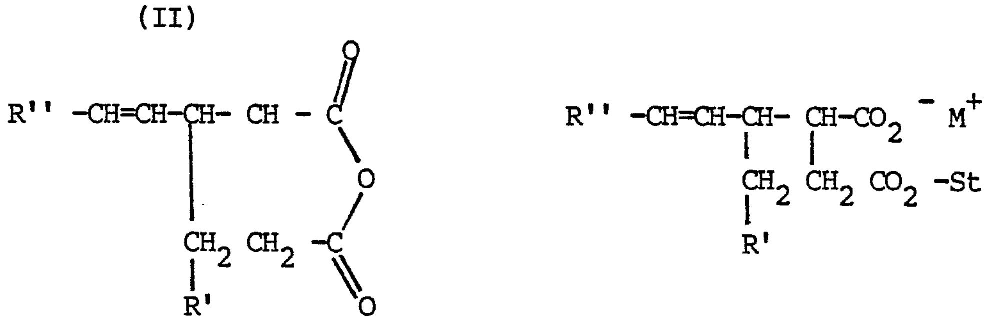

(III)

Another suitable class of reagents for preparing the hydrophobically modified starches useful herein include the imidazolides or N,N'-disubstituted imidazolium salts of carboxylic or sulfonic acids such as those described in U.S. Re. 28,809 issued May ll, 1976 to M. Tessler which is a reissue of U.S. Pat. No. 3,702,663 issued on March 13, 1973 to M. Tessler and U.S. pat. No. 4,020,272 issued April 26, 1977 to M. Tessler having the general formula

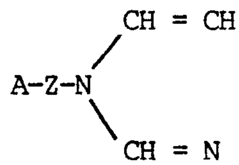

or

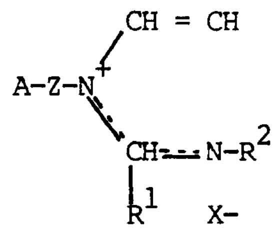

wherein Z is $-\overset{O}{\overset{\|}{C}}-$ -or $-SO_2-$, A comprises a hydrocarbon chain of at least 5, preferably 5 to 14, carbon atoms, $R^1$ is H or $C_1$-$C_4$ alkyl, $R^2$ is $C_1$-$C_4$ alkyl, and $X^-$ is an anion.

Starch esters useful herein are represented by the formula

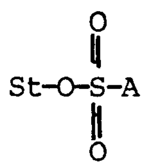

or

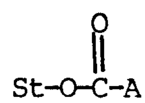

wherein St-O-represents a starch molecule and A comprises a saturated or unsaturated hydrocarbon chain of at least 5 carbon atoms. A is preferably a $C_5$ to $C_{22}$ alkyl or alkenyl group.

A third class of reagents useful herein include the etherifying reagents described in U.S. Pat. No. 2,876,217 issued on March 3, 1959 to E. Paschall comprising the reaction product of an epihalohydrin with a tertiary amine. The amine may have the structure

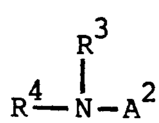

wherein $R^3$ and $R^4$ are independently H or a $C_1$-$C_4$ alkyl and $A^2$ comprises a hydrocarbon chain of at least 5, preferably 5 to 14, carbon atoms.

A fourth class of reagents useful herein include the etherifying reagents described in U.S. Pat. No. 2,813,093 (issued November 12, 1957 to C. Caldwell et al.) comprising tertiary amine halides which contain a $C_5$ or greater alkyl or alkenyl group as one of the amine substituents.

The preferred starch ethers useful herein are represented by the formula

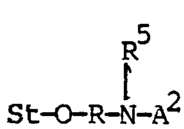

or

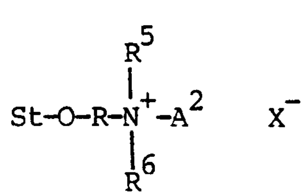

wherein St-O represents a starch molecule, R is an alkylene or hydroxyalkylene group, $R^5$ and $R^6$ are independently H or $C_1$-$C_4$ alkyl, $A^2$ comprises a hydrocarbon chain of at least 5 carbon atoms, and X is a halide (e.g. bromide or chloride). $A^2$ is most preferably a $C_5$ to $C_{22}$ alkyl or alkenyl group and R is most preferably a $C_2$-$C_4$ group.

The starch etherification or esterification reactions may be conducted by a number of techniques known in the art and discussed in the literature employing, for example, an aqueous reaction medium, or organic solvent medium, or a dry heat reaction technique. See, for example, R. L. Whistler, Methods in Carbohydrate Chemistry, Vol. IV, 1964, pp. 279-311; R. L. Whistler et al., Starch: Chemistry and Technology, Second Edition, 1984, pp. 311 366; and R. Davidson and N. Sittig, Water-Soluble Resins, 2nd Ed., 1968, Chapter 2. The hydrophobically modified starch derivatives herein are preferably prepared employing an aqueous reaction medium at temperatures between 20° and 45°C.

For use herein, the starch derivatives may be produced either in gelatinized or ungelatinized form. The advantage of having the derivative in ungelatinized form is that it may be filtered, washed, dried and conveyed to the mill in the form of a dry powder.

When employing the dicarboxylic acid anhydride reagents, starch is preferably treated in granular form with the reagents in an aqueous alkali medium at a pH not lower than 7 nor higher than 11. This may be acccomplished by suspending the starch in water, to which has been added (either before or after the addition of the starch) sufficient base such as alkali metal hydroxide, alkaline earth hydroxide, or ammonium hydroxide to maintain the mixture in an alkaline state during the reaction. The required amount of the reagent is then added, agitation being maintained until the desired reaction is complete. Heat may be applied, if desired, in order to speed the reaction; however, if heat is used, temperatures of less than about 40°C should be maintained. In a preferred method, the alkali and the anhydride reagent are added concurrently to the starch slurry, regulating the rate of flow of each of these materials so that the pH of the slurry remains preferably between 8 and 11. After completion of the reaction, the pH of the reaction mixture is adjusted to a value of from 3 to 7 with any commercial acid such as hydrochloric, sulfuric, or acetic acid, and the like. The starch half-acid ester is then recovered by conventional techniques.

Due to greater hydrophobic nature of certain of the substituted cyclic dicarboxylic acid anhydride reagents useful herein (i.e., those having $C_{10}$ or higher substituents), the reagents react with starch in only minor amounts in standard aqueous reactions. In order to improve the starch reaction efficiency, starch is reacted with the hydrophobic reagent under standard aqueous conditions in the presence of at least 5%, preferably 7-15% (based on the weight of the reagent), of an organic quaternary salt which is employed as a phase transfer agent. The organic salts, of which trioctylmethyl ammonium chloride and tricaprylmethyl ammonium chloride are preferably employed, are described in U.S. 3,992,432 issued November 16, 1976 to D. Napier et al.

The molecular weight of the applicable hydrophobically modified starch derivatives may be varied by performing the derivatization on the native starch. Alternatively, starches degraded to medium or lower molecular weights by acid hydrolysis, enzyme conversion or oxidative procedures may be employed. The preferred starch emulsifiers are acid-hydrolyzed and are derived from fluidity types in the range of 20-80 WF, more preferably 40-80 WF. The degree of hydrophobicity (i.e. lipophilicity) of the applicable starch derivatives may be changed by varying the type and chain length of the particular derivatizing reagent as well as the degree of substitution of the starch. It will be understood that the proportion of etherifying or esterifying reagent used will vary with the particular reagent chosen (since they naturally vary in reactivity and reaction efficiency), and the degree of substitution desired. As an example, the range of ASA treatment is 1-20% ASA reagent on the weight of the starch. The preferred ASA derivatives are in the treatment range of 3-10% and are derived from Type III ASA where R′ $CH_3$-and R″ is $CH_3\text{-}(CH_2)_n$ n = 7-9; and from Type I reagent where R′ = $CH_3\text{-}(CH_2)_n\text{-}$, n = 5-9. In general, a starch derivative made with 1% of the reagent, based on the weight of the starch may be used; however preferred ranges are one the order of about 5% to 10%.

It will be recognized that there is a wide design latitude in utilizing these lipophilic starch derivatives as protective colloids in place of either conventional starches or polyvinyl alcohol. Thus, the molecular weight of the starch derivative may be varied to provide certain viscosity effects in the emulsion; the lipophilic group nature and level can be varied to provide degrees of emulsification capability which will impact the particle size of the emulsion and the rate of polymerization. Further, the plant source from which the starch is derived as well as any ester or ether derivatization may be varied to produce certain rheological and adhesive properties in the final emulsion.

The primary monomer constituent used in the practice of this invention is vinyl acetate and the emulsions of this invention are derived from polymers oontaining at least 50% by weight of vinyl acetate. The vinyl acetate may be copolymerizable with any conventionally employed comonomers. Suitable comonomers include those selected from the class of ethylene; vinyl esters of aliphatic carboxylic acids containing 3-20 carbon atoms; dialkyl esters of maleic and fumaric acid oontaining 1-8 carbon atoms in each alkyl group; and $C_1$-$C_8$ alkyl acrylates and methacrylates. The comonomers may be present in the emulsion copolymers at levels up to 50% by weight of the total polymer composition.

When the latices have very small particle size, eg. below about 0.25 microns, it is advantageous to use, as a stabilizer, an ethylenically unsaturated acid having up to six carbon atoms as a comonomer. Typical acids of this type are acrylic acid, methacrylic acid, itaconic acid, maleic acid, vinyl sulfonic acid and the like. The amount of unsaturated acid is suitably 0.l to 3% based on the total weight of the polymer composition.

It is also advantageous at times to be able to crosslink the vinyl acetate emulsions of the invention in order to improve the high temperature mechanical properties of the polymer emulsion films. The cross-linking agents can be either of the immediately reactive type or of the post reactive type. Examples of the former are the vinyl and allyl esters of polybasic acids such as divinyl adipate and diallyl maleate and triallyl cyanurate. Examples of crosslinking agents of the post reactive type are N-methylol compounds such as N-methylol acrylamide or N-methylol methacrylamide and their methyl or butyl ethers. The quantity of crosslinking agent of the immediately reactive type is generally in the range of 0.0l -l.0% on the total polymer weight. In the case of the post reactive type, the quantity most suitable employed is 0.5 to l0% by weight of the total monomers.

The emulsions are prepared using conventional polymerization procedures wherein the monomers are interpolymerized in an aqueous medium in the presence of the hydrophobic starch derivative using a free-radical catalyst, the aqueous system being maintained by a suitable buffering agent, if necessary, at a pH of 2 to 7. If a batch process is used, the vinyl acetate and any optional non-crosslinking monomers are suspended in water and are thoroughly agitated while the vinyl acetate is gradually heated to polymerization temperature. The homogenization period is followed by a polymerization period during which the catalyst, which consists of a main catalyst or initiator, and may include an activator, is added incrementally or continuously together with any optional crosslinking comonomers. If the slow addition procedure is employed, the vinyl acetate and any optional comonomers are added gradually throughout the polymerization reaction. In either case, the polymerization is performed at conventional temperatures from about 70°F (20°C) to 225°F (l08°C), preferably from l20°F (50°C) to l75° F (80°C), for sufficient time to achieve a low monomer content, e.g. from 0.5 to about l0 hours, preferably from 2 to about 6 hours, to produce a latex having less than l.5 percent preferably less than 0.5 weight percent free monomer.

In the case of vinyl ester interpolymers containing ethylene, the polymerization procedure is similar to that discussed above except that it is carried out under pressure of l0 to l30 atmospheres using polymerization procedures taught, for example, in U.S. Pat. Nos. 3,708,388 issued January 2, l973 to Lindemann et al.; 3,404,ll2 issued October l, l968 to Lindemann et al.; 3,7l4,099 issued January 30, l973 to Biale and 4,l64,489 issued August l4, l979 to Daniels et al. In these cases, the ethylene content of the interpolymer depends on the ethylene content of the aqueous polymerization medium. Factors which control the ethylene content of the polymerization medium include the partial pressure of ethylene in the vapor phase over the medium, the temperature of polymerization and the degree of mixing between the vapor phase and the liquid medium. Generally, the polymerization is performed at temperatures from l20°F (50°C) to l75°F (80°C) and, at these temperatures, ethylene partial pressures from 50 to l,500, preferably from 250 to l,000 psig, are sufficient to incorporate from l to 30, preferably from 5 to 25, weight percent ethylene in the polymer. The reaction medium is preferably agitated with a stirrer, however, other agitation can be used as sparging the liquid with recirculated ethylene from the vapor phase. In the preferred procedure, the ethylene partial pressure is maintained constant throughout the polymerization period so that this monomer is continuously supplied at a constant rate.

The polymerization is typically initiated by a free radical initiator such as water soluble peracid or salt thereof, e.g., hydrogen peroxide, peracetic acid, persulfuric acid or the ammonium and alkali metal salts thereof, e.g, ammonium persulfate, sodium peracetate, lithium persulfate, potassium persulfate, sodium persulfate, etc. Alternatively, organic peroxides such as benzoyl peroxide, t-butyl hydroperoxide, etc., may also be employed. A suitable concentration of the initiator is from 0.05 to 5.0 weight percent and preferably from 0.l to 3 weight percent.

The free radical initiator can be used alone and thermally decomposed to release the free radical initiating species or can be used in combination with a suitable reducing agent in a redox couple. The reducing agent is typically an oxidizable sulfur compound such as an alkali metal metabisulfite and pyrosulfite, e.g., sodium metabisulfite, sodium formaldehyde sulfoxylate, potassium metabisulfite, sodium pyrosulfite, etc. The amount of reducing agent that can be employed throughout the copolymerization generally varies from 0.l to 3 weight percent of the amount of polymer.

The starch derivative may be used in the form of a cold water soluble powder in which case it is dissolved in water prior to addition to the polymerization reactor. Alternatively, the starch may be used in granular form in which case it is generally slurried in water at a l0 to 40% solids level, jet cooked or pressure-batch-cooked and added as a dispersion to the reactor. The starch is added at a total solids level of from about I to l0% by weight of the monomers, with the higher levels being required if batch polymerization procedures are employed. Amounts in excess of l0% could be used with the maximum amount dependent upon the desired viscosity, particle size and end use of the emulsion.

The hydrophobically modified starch derivative used in the polymerization can also be added, in its entirety, to the initial charge or a portion of the emulsifier, e.g. from 25 to 90 percent thereof, can be added continuously or intermittently during polymerization.

The latices are produced and used at relatively high solids contents, e.g., between 35 and 70%, although they may be diluted with water if desired. The preferred latices will contain from 40 to 60, and, most preferred, from 50 to 60 weight percent solids.

In the following examples, all parts are by weight unless otherwise indicated.

Water fluidity (WF) is a measure of the degree of degradation of the starch and, in the examples where degraded starches are used, is measured using a Thomas Rotational Shear-Type Viscometer - (manufactured by Arthur H. Thomas Co., Philadelphia, PA l9l06) in accordance with standard procedures such as are disclosed in U.S. Pat. No. 4,499,ll6 issued February l2, l985 to Zwiercan et al.

Grit measurements are recorded based on passage through 200 mesh.

Example I

This example describes the preparation of a starch stabilized polyvinylacetate emulsion using octenylsuccinic anhydride treated starch as a protective colloid and a slow-addition polymerization procedure. A reactor with four-neck flask was fitted with a thermometer, condenser, agitator, subsurface nitrogen purge, and suitable addition funnels. The following charges were prepared:

(A) 6l.67 parts water, 5 parts 3% octenylsuccinic anhydride (OSA) treated waxy-maize starch at 45 water fluidity (WF), 0.l25 part 25% sodium hydroxide solution, 0.6 part sodium bicarbonate, and 0.6 part sodium persulfate;

(B) l6.67 parts vinyl acetate , 3.33 parts dioctyl maleate;

(C) 8.33 parts water, 0.025 part sodium persulfate, and 0.583 part t-butyl hydrogen peroxide;

(D) 8.33 parts water, 0.5 part sodium formaldehyde sulfoxalate, and 0.l25 part sodium bicarbonate;

(E) 80 parts vinyl acetate.

A dispersion of initial charge A was formed in the reactor. Agitation was started and charge B was added. The mixture was heated to 50°C and purged with nitrogen for l5 minutes. Charges C and D were slow-added over 4.5 hours. Five minutes after initiation, temperature was raised to 75°C over 30 minutes. Charge E was then slow-added over 3 hours. The mixture was held at 78-80°C until charge of the initiators was completed, then cooled and discharged. The emulsion was designated Emulsion I.

The procedure was then repeated using varying parts of the OSA starch as follows:

| Emulsion | Amount Starch | Treatment Level of Starch |
|---|---|---|
| 2 | 6 parts | 3% OSA |
| 3 | 4 parts | 3% OSA |
| 4 | 5 parts | 5% OSA |
| 5 | 6 parts | 5% OSA |
| 6 | 3 parts | 7% OSA |
| 7 | 5 parts | 7% OSA |

The emulsions produced above had the following physical properties:

| Emulsions | Solids (%) | Visc. (cps) | Grit (%) | I.V.(air dry DMF) |
|---|---|---|---|---|
| 1 | 56.7 | 2600 | 0.008 | 0.44 |
| 2 | 56.7 | 2900 | 0 | 0.28 |
| 3 | 57.1 | 2310 | 0.015 | 0.59 |
| 4 | 57.5 | 4000 | 0.002 | 0.41 |
| 5 | 56.8 | 10280 | 0.026 | 0.42 |
| 6 | 56.3 | 110 | 0.011 | 0.39 |
| 7 | 57.6 | 6760 | 0.009 | 0.42 |

The above results indicate that the higher the OSA substitution, the more efficient the modified starch, and hence the less starch is required for use as protective colloid for the emulsion polymerization. In particular, the results show that the use of the ASA starches enables one to produce emulsion polymers of high molecular weights and/or at high solids levels while retaining a manageable viscosity .

Example 2

The procedure of Example I was repeated using different starch bases.

Emulsion 8 was prepared with 8 parts 3% OSA-treated waxy maize starch at 80 water fluidity. The resulting emulsion had 57% solids at 0.0I9% grit and 0.32 I.V.

Emulsion 9 was prepared with 6 parts 3% OSA-treated tapioca starch at 4I.5 water fluiditity. The resulting emulsion had 57% solids at 2980 cps, 0 grit and an I.V. of 0.47.

Example 3

This example describes the preparation of starch stabilized 96.7 vinyl acetate/3.3 dioctyl maleate/3.6 N-methylolacrylamide copolymer emulsion. A reactor with four-neck flask was fitted with a thermometer, condenser, agitator, subsurface nitrogen purge, and suitable addition funnels. The following charges were prepared;

(A) 94 parts water, 4 parts 3% OSA-waxy maize starch at 45 WF, 0.I26 part 25% sodium hydroxide solution, 0.4 part sodium bicarbonate, and 0.I8 part ammonium persulfate;

(B) 3I.7 parts vinyl acetate, 3.3 parts dioctyl maleate;

(C) pre-emulsion of 20 parts water, 2 parts 3% OSA waxy-maize starch at 45 WF, 0.2 part sodium bicarbonate, 7.5 parts N-methylolacrylamide (48%) and 65 parts vinyl acetate;

(D) 4 parts water and 0.I part ammonium persulfate.

The initial change A was added to the reactor. Agitation was started and B was added. The mixture was heated to reflux. At 72°C, charge C was slow-added over 2 hours and I5 minutes. The mixture was then held for another I hour and I5 minutes until the reflux stops. Charge D was added over I5 minutes. The temperature of the mixture was raised to 80-85°C and held for 45 minutes, then cooled and discharged. The resulting emulsion has 44.3% solids, 0.036% grit, 3I50 cps., 0.9 dl/g in I.V. and 30% insolubles after the emulsion was catalyzed by ammonium chloride and cured to I30°C for 5 minutes.

Example 4

A vinyl acetate, dioctyl maleate, butyl acrylate emulsion copolymer (87:3:I0) was prepared using the following charges:

(A) I06 parts water, 8 parts 3% OSA-treated waxy-maize starch at 45 WF, 0.06 part sodium meta bisulfite, 0.2 part I0% solution of sodium bicarbonate, 0.2 parts I% $FeSO_4$ ($7H_2O$);

(B) 4 parts vinyl acetate and I part dioctyl maleate;

(C) 83 parts vinyl acetate, I0 parts butyl acrylate, and 2 parts dioctyl maleate;

(D) 8 parts water, 0.66 parts t-butyl hydrogen peroxide, and 0.54 part sodium bicarbonate.

(E) 8 parts water and 0.62 part sodium meta bisulfite.

A dispersion of initial charge A was formed in the reactor. Agitation was started and charge B was added. The mixture was purged with nitrogen for l hour. Charges D and E were then slow-added over 5 hours. Initiation was at 40°C, 5 minutes after which the temperature was raised to the reaction temperature of 65°C over 30 minutes. Thirty minutes after the start of the slow-add of charges D and E, charge C was begun and continued over 4 hours. The resulting latex had 5l.6% solids at l4350 cps, 0.007% grit and 0.73 dl/g I.V. in DMF (dimethylformamide).

Example 5

The procedure of Example 4 was repeated using a 5% tetradecenylsuccinic anhydride-modified tapioca starch at 50 WF as the protective colloid. In this procedure, the same components used in Example 4 were employed except 5 parts of the starch and 79 parts water were predispersed and added to Charge A and the butyl acrylate in Charge C was replaced by an additional l0 parts vinyl acetate.

The resulting latex had 52% solids at 576 cps., 0.005% grit and 0.54 dl/g I.V. DMF.

The above procedure was again repeated using a 5% 3-chloro-2-sulfo propanoic acid and 3% octenylsuccinic anhydride modified tapioca starch at 44 WF as the protective colloid. In this procedure, the same components used above were employed except 87 parts water was present in Charge A.

The resulting latex had 49.7% solids at 4060 cps, 0.0ll% grit and 0.62 dl/g I.V. in DMF - (dimethylformamide).

Example 6

This example illustrates the use of a slow addition polymerization procedure in order to prepare an ethylene vinyl acetate emulsion polymer.

A l0 liter autoclave equipped with heating/cooling, variable rate stirrer and means of dosing monomers, initiators and pressurizing with ethylene was employed.

To the autoclave were added 280g of 3% OSA amioca starch (45 WF) dispersed in 2360g of water, l.25g sodium hydroxide and l6g sodium bicarbonate in l80g water and 2g sodium persulphate in 60g water. To this dispersion was then added 600g of vinyl acetate and the contents were then pressurized with ethylene to 450 psi and equilibration carried out for l5 minutes. At the end of the equilibration period solutions of lg sodium persulphate and l7g tertiary butyl hydroperoxide in 225g of water and 5g sodium bicarbonate and 20g sodium formaldehyde sulfoxalate in 230g of water were metered in incrementally over 5 hrs. The contents were allowed to reach 75°C and then 2600g of vinyl acetate were also metered in over a 4 hr. period. At 75°C, ethylene pressure was increased to 750 psi and maintained at this level during the vinyl acetate addition period. At completion of the initiator solution additions, the contents were cooled to 60°C and then discharged into a 30 liter expansion vessel to de-gas residual ethylene from the system. The emulsion was designated Emulsion 8.

The procedure described above was repeated using 200g of 5% OSA tapioca starch (45 WF). The emulsion was designated Emulsion 9. The properties for the two emulsions are shown below:

| Emulsions | Solids (%) | Visc. (cps) | Grit (%) | I.V.(as is DMF) |
|---|---|---|---|---|
| 8 | 55.4 | 1890 | .047 | 0.33 |
| 9 | 53.7 | 930 | .006 | 0.31 |

The following examples illustrate the use of a batch polymerization procedure to prepare the polymers in accordance with the present invention. More specifically, these examples show the superior efficiency of the ASA starches as protective colloids under the stringent batch polymerization procedures.

Example 7

To a l liter kettle equipped with a condenser and turbine agitator was added 40g of 3% OSA amioca starch (45 WF) dispersed in 2l0g of water, 0.3g sodium bicarbonate in 30g water, lg sodium vinyl sulfonate in 40g water and lg of a l% aqueous solution of ferrous sulfate. The pH was adjusted to between 5.5 and 6.0 with phosphoric acid and then 400g of vinyl acetate were added slowly with agitation to form an emulsion.

The kettle was then heated to 50°C and the system de-gassed by bubbling nitrogen subsurface for 20 minutes. The polymerization was started by the addition of solutions of 2g of tertiary butyl hydroperoxide and lg of sodium bicarbonate in 30g water and 2g zinc formaldehyde sulfoxylate in 30g water, added incrementally over 3 hrs. During this time the reaction temper-was kept between 50-60°C by means of cooling. At the completion of the addition of the initiator solutions the homopolymer emulsion was cooled to room temperature and designated Emulsion l0.

Example 8

Two additional emulsions were prepared as above. Emulsion ll was prepared with 26 g of 5% OSA tapioca starch (45 WF) and Emulsion l2 was prepared replacing the 400g vinyl acetate with 360g vinyl acetate and 40g dioctyl maleate. The properties of the emulsions are shown below:

| Emulsions | Solids (%) | Visc. (cps) | Grit (%) | I.V.(as is DMF) |
|---|---|---|---|---|
| 10 | 52.0 | 2180 | .008 | 0.92 |
| 11 | 51.3 | 4170 | .022 | 0.63 |
| 12 | 50.7 | 2640 | .016 | 0.49 |

Example 9

This example illustrates the use of a batch polymerization procedure to prepare an ethylene vinyl acetate emulsion polymer.

To the autoclave described in Example 6 were added 240g of 5% OSA tapioca starch (45 WF) in 2630g of water, 2.5g sodium bicarbonate in l00g of water, l0g sodium vinyl sulfonate in 30g water, 4g zinc formaldehyde sulfoxylate in l00g of water and 5g of a l% solution in water of ferrous sulfate. The pH was adjusted to 5.5 to 6.0 with phosphoric acid and then 3000g of vinyl acetate were added slowly with agitation to form an emulsion.

The reactor and contents were then pressurized to 500 psi and equilibrated at 50°C for l5 minutes. At the end of the equilibration period solutions of 2lg of tertiary butyl hydroperoxide and l5g of sodium bicarbonate in 220g of water and 20g zinc formaldehyde sulfoxylate in 350g water were metered incrementally over a 4 hr period. At the end of the addition of the initiator solutions the temperature of the contents, which had been allowed to rise to 80°C over the first hour of the reaction, was reduced to 60°C and the contents discharged into a 30 liter expansion vessel to de-gas residual ethylene from the system. The emulsion was designated Emulsion l3.

The procedure described above was repeated except that l85g of 5% OSA tapioca starch were used instead of 240g and 2700g of vinyl acetate and 300g dioctylmaleate were used instead of 3000g of vinyl acetate. This emulsion was designated Emulsion l4. The properties of the emulsions are shown below:

| Emulsions | Solids (%) | Visc. (cps) | Grit (%) | I.V.(as is DMF) |
|---|---|---|---|---|
| 13 | 51.6 | 55 | .023 | 1.02 |
| 14 | 53.5 | 95 | .029 | 0.90 |

Following the procedures described above, comparable results would be expected using starches treated with other alkenyl succinic anhydrides including pentylsuccinic anhydride, pentenylsuccinic anhydride, hexylsuccinic anhydride, octylsuccinic anhydride, nonylsuccinic anhydride, decylsuccinic anhydride, decenylsuccinic anhydride, dodecylsuccinic anhydride, dodecenylsuccinic anhydride, tetradecylsuccinic anhydride, tetradecenylsuccinic anhydride, hexadecylsuccinic anhydride, hexadecenylsuccinic anhydride, octadecylsuccinic anhydride, 3-methyl-hexenylsuccinic anhydride, etc.

EXAMPLE I0

This example describes the preparation of a starch stabilized polyvinylacetate emulsion using myristoyl-N-methylimidazolium chloride treated starch as a protective colloid and a slow-addition polymerization procedure. A reactor with four-neck flask was fitted with a thermometer, condenser, agitator, subsurface nitrogen purge, and suitable addition funnels. The following charges were prepared:

(A) 6I.4 parts water, 6 parts 5% myristoyl-N-methylimidazolium chloride treated waxy-maize starch at 52 WF, 0.I26 part 25% sodium hydroxide solution, 0.4 parts sodium bicarbonate, and 0.05 parts sodium persulfate;

(B) I6.6 parts vinyl acetate, 3.4 parts dioctylmaleate;

(C) 8.4 parts water, 0.026 part sodium persulfate and 0.58 part t-butyl hydrogen peroxide;

(D) 8.4 parts wate, 0.5 part sodium formaldehyde sulfoxylate and 0.I26 part sodium bicarbonate;

(E) 80 parts vinyl acetate.

A dispersion of initial charge A was formed in the reactor. Agitation was started and charge B was added. The mixture was heated to 50°C and purged with nitrogen for I5 minutes. Charges C and D were slow-added over 4.5 hours. Five minutes after initiation, the temperature was raised to 75°C over 30 minutes. Charge E was then slow-added over 3 hours. The mixture was held at 78-80°C until addition of the initiators was completed, then cooled and discharged.

The resulting emulsion has the physical properties of 56.6% solids, 475 cps in viscosity, 0.025% grit and 0.34 dl/g I.V. (in DMF).

This indicates that fatty acid modified starch can also provide a high solids and low viscosity emulsion.

Other suitable esterifying reagents which may be employed in the preparation of starch derivatives useful herein with similar effectiveness expected include, for example, the N,N′-disubstituted imadazolium salts of the following acids:

hexanoic acid
2-ethylhexanoic acid
decanoic acid
caprylic acid
lauric acid
palmitic acid

EXAMPLE II

This example describes the preparation of a starch stabilized polyvinylacetate emulsion using I0% dimethyl glycidyl-N-decyl ammonium chloride treated starch as a protective colloid and a slow-addition polymerization procedure. A reactor with four-neck flask was fitted with a thermometer, condenser, agitator, subsurface nitrogen purge, and suitable addition funnels. The following charges were prepared:

(A) 7I parts water, 6 parts I0% dimethyl glycidyl N-decyl ammonium chloride treated waxy-maize starch at 47 WF, 0.00I part ferrous sulfate and 0.06 part sodium bisulfite;

(B) 4 parts vinyl acetate, I part dioctyl maleate;

(C) 8 parts water 0.66 parts t-butyl hydrogen peroxide, and 0.54 part sodium bicarbonate;

(D) 8 parts water, 0.62 part sodium bisulfite;

(E) 95 parts vinyl acetate.

Mixture of A was charged to the reactor and purged with $N_2$ for I hour. Agitation was started and charge B was added and heated to 60°C. At 40°C, charges C and D were slow-added over 5.5 hours. Thirty minutes later, charge E was slow-added over 4.5 hours at 60°C. The mixture was held at 60°C for 20 minutes more, then cooled and discharged.

The resulting emulsion has the physical properties of 5I.4% solids, 2400 cps in viscosity, 0.074% grit and 0.46 dl/g I.V. (in DMF).

This indicates that cationic starch with long chain hydrophobe can also be used as protective colloid.

In a like manner, starches may be reacted with other substituted quaternary amine epoxide reagents and employed herein with similar effectiveness expected. Suitable reagents include, for example, the reaction products of epihalohydrins with one of the long chain tertiary amines listed below:

pentyldimethylamine
hexyldimethylamine
octyldimethylamine
2-ethylhexyldimethylamine
nonyldimethylamine
decyldimethylamine
decenyldimethylamine
dodecenyldimethylamine
tetradecyldimethylamine
tetradecenyldimethylamine
hexadecyldimethylamine
hexadecenyldimethylamine
octadecyldimethylamine
octadecenyldimethylamine
didecylmethylamine

Comparative Examples

These examples show the reduced efficiency of the prior art starches as protective colloids in emulsion polymerization. Specifically, the examples show that the starches of the prior art must be used either at high levels or in conjunction with other emulsifiers using either the slow addition procedures of Example 5 or the batch polymerization procedures of Example 7.

The procedure of Example 5 was also repeated using hydroxyethyl ether corn starch (Amaizo 735D by American Maize Product CO.) as the protective colloid. In this procedure, the same components used in Example 5 were employed except more water was added to the initial charge A. Three emulsions were prepared using varying parts of the starch and water as follows:

| Emulsion | Added Water (parts) | Starch (parts) |
|---|---|---|
| 1 C | 92 | 4 |
| 2 C | 94 | 6 |
| 3 C | 96 | 8 |

The emulsions produced above had the following physical properties:

| Emulsion | Solids (%) | Grit (%) | Visc. (cps) |
|---|---|---|---|
| 1 C | 48.2 | 1.57 | 94 |
| 2 C | -* | -* | -* |
| 3 C | 48.9 | 3.44 | 910 |

*Not measured because of heavy coagulation.

In addition to the unacceptably high grit levels recorded above, it is also noted that heavy coagulum formed during the polymerization of Emulsions IC and 2C. In all cases, the grit level was unacceptably high, another indication of the poor emulsion properties.

The procedure for Example 7 was also repeated except that 40g 3% OSA amioca starch was replaced by 40g of the hydroxyethyl starch. Under these batch polymerization conditions, the emulsion coagulated at the end of the reaction due to instability.

When the procedure of Example 7 was again repeated using 40 grams of a waxy maize starch of 50 WF, the product also coagulated and it was necessary to increase the starch level to 60 grams in 315 grams water (a 15% addition level of starch on monomer), in order to effect a satisfactory emulsion. At this level, the emulsion had a solids content of 47.7, a viscosity of 175 cps, a high grit of 0.126% and an I.V. of 0.90 in DMF.

The above comparative examples clearly demonstrate the superior results obtained using hydrophobically modified starches as protective colloids in accordance with the teachings of the invention.

## Claims

1. An emulsion polymer comprising 50%-100% by weight of vinyl acetate and 0-50% by weight of at least one copolymerizable comonomer, said emulsion polymer being prepared by emulsion polymerization employing 1-10% by weight of the total monomer of a hydrophobically modified starch as a protective colloid.

2. In a process for the emulsion polymerization of polymers containing at least 50% by weight vinyl acetate, the improvement which comprises carrying out the polymerization employing 1-10% by weight of an hydrophobically-modified starch as the protective colloid.

3. Claim 1 or 2 wherein the hydrophobically modified starch contains an ether, simple ester or half ester substitutent with a saturated or unsaturated hydrocarbon chain of at least 5 carbon atoms.

4. Claim 1 or 2 wherein the alkenylsuccinate modified starch is selected from the group represented by the formulas:

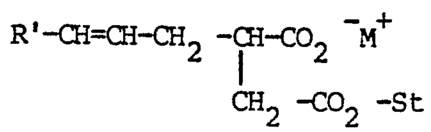

(I)

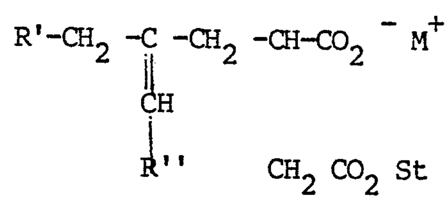

(II)

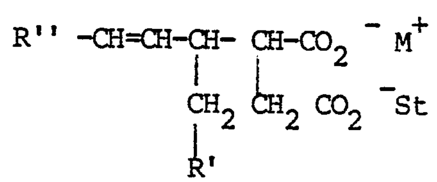

(III)

wherein M is a metal cation, St is the starch residue, and where R′ and R″ may be the same or different and are selected frcm the group consisting of:

$CH_3$ -($CH_2$-) $_n$ where n = 1 -20

5. Claim 4, wherein the alkenylsuccinate-modified starch is Type II where R′ is $CH_3$ and R″ is $CH_3(CH_2)_n$ and n is 7 to 9 or of Type I where R′ is $CH_3$ $(CH_2)_n$ and n is 5 to 9 and wherein the alkenylsuccinate treatment is 1 to 20% by weight of the starch.

6. Claim 1 or 2 wherein the hydrophobically modified starch is a starch ether comprising the reaction product of starch and an etherifying reagent, the reagent being a) the reaction product of an epihalohydrin and a tertiary amine containing the hydrocarbon chain; or b) a tertiary amine halide or salt thereof containing the hydrocarbon chain.

7. Claim 1 or 2 comprising a homopolymer or vinyl acetate.

8. Claim I or 2 wherein the copolymerizable comonomer is selected from the group consisting of ethylene, vinyl esters of aliphatic carboxylic acids containing 3-20 carbon atoms, dialkyl esters of maleic and fumaric acid containing I-8 carbon atoms in each alkyl group, and $C_1$-$C_8$ alkyl acrylates and methacrylates.

9. Claim I or 2 wherein the hydrophobically-modified starch comprises an ester represented by the formula

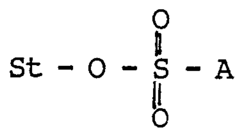

or

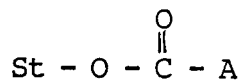

wherein St-O represents a starch molecule and A comprises a saturated or unsaturated hydrocarbon chain of at least 5 carbon atoms.

I0. The emulsion polymer of Claim I or 2 wherein there is additionally present 0.0I to I% by weight of an immediately reactive cross-linking comonomer or 0.5 to I0% by weight of a post-reactive cross-linking comonomer.

European Patent Office

# EUROPEAN SEARCH REPORT

Application number

EP 86 11 5225

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-4 352 916 (L.M. LANDOLL) * Claim 1 * --- | 1-3,7-8 | C 08 F 18/04 |
| D,A | US-A-2 661 349 (C.G. CALDWELL et al.) * Claim 1; column 10, lines 40-44 * --- | 1-3,7,8 | |
| A | US-A-3 769 248 (L.P. KOUVATS) * Claim 1 * ----- | 1-3,7,8 | |

TECHNICAL FIELDS SEARCHED (Int. Cl 4)

C 08 F

The present search report has been drawn up for all claims

| Place of search | Date of completion of the search | Examiner |
|---|---|---|
| THE HAGUE | 10-02-1987 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82